# EUROPÄISCHE PATENTSCHRIFT

(11) **EP 3 569 894 B1**
(45) Veröffentlichungstag und Bekanntmachung des Hinweises auf die Patenterteilung: **07.07.2021**
(21) Anmeldenummer: 18172183.8
(22) Anmeldetag: 14.05.2018
(51) Int. Cl.: F16H 27/08, F16H 33/02, F16H 35/00, F16K 31/53

(54) **STELLANTRIEB**
ACTUATOR
MÉCANISME DE COMMANDE

(43) Veröffentlichungstag der Anmeldung: 20.11.2019
(73) Patentinhaber: Siemens Schweiz AG, 8047 Zürich (CH)
(72) Erfinder: KONRAD, Hilmar, 6340 Baar (CH)
(74) Vertreter: Maier, Daniel Oliver

(56) Entgegenhaltungen:
- DE-U1-202014 102 355
- GB-A- 2 388 177

## Beschreibung

Die vorliegende Erfindung betrifft einen Stellantrieb, aufweisend ein Antriebselement, einen Übertragungsabschnitt und ein Stellelement, wobei das Antriebselement zum Antreiben des Stellelements mit dem Stellelement durch den Übertragungsabschnitt mechanisch wirkverbunden ist, der Stellantrieb ferner aufweisend eine Rückstellfeder, die zum Bereitstellen einer auf das Stellelement wirkenden Schließkraft mit dem Stellelement mechanisch wirkverbunden ist. Der Übertragungsabschnitt weist zumindest ein Antriebszahnrad, ein Übertragungszahnrad und ein Abtriebszahnrad auf. Das Übertragungszahnrad weist einen Antriebszahnabschnitt und einen Abtriebszahnabschnitt auf, wobei der Antriebszahnabschnitt mit einer ersten Übertragungsfunktion kämmend in das Antriebszahnrad sowie der Abtriebszahnabschnitt mit einer zweiten Übertragungsfunktion kämmend in das Abtriebszahnrad eingreift. Ferner sind die erste Übertragungsfunktion und die zweite Übertragungsfunktion unterschiedlich.

Aus dem deutschen Gebrauchsmuster DE 20 2014 102355 U1 ist ein Aktuator bekannt, der an einer Abtriebswelle eine zylindrische Schraubenfeder als Rückstellfeder aufweist. Der Aktuator umfasst ferner einen Getriebezug mit einem in Abhängigkeit von einem Betätigungswinkel der Abtriebswelle veränderlichem Übersetzungsverhältnis. Der Getriebezug weist dabei ein progressives Getriebe mit einem ersten spiralverzahnten Zahnrad und ein mit dem ersten spiralverzahnten Zahnrad kämmendes zweites spiralverzahntes Zahnrad auf. Diese Zahnradkombination weist allerdings eine sehr hohe Bautiefe auf.

Stellantriebe sind in der modernen Technik weitläufig bekannt und können beispielsweise zum Betätigen bzw. Antreiben einer Klappe oder eines Ventils, insbesondere zum Heizen, Lüften oder Klimatisieren eines Gebäudes verwendet werden. Der Stellantrieb ist zumeist dazu ausgebildet, ein Stellelement von einer ersten Stellposition in eine zweite Stellposition zu bewegen. Beide Stellpositionen können üblicherweise auch Endanschläge bilden. Oftmals kann die erste Stellposition als Startposition oder Ruheposition, die zweite Stellposition als Betätigungsposition oder Endposition bezeichnet werden. Bevorzugt kann die erste Stellposition ferner derart vorgesehen sein, dass der Stellantrieb in diese mittels der vorgespannten Rückstellfeder zurückgestellt wird, sobald sich der Stellantrieb im stromlosen Zustand befindet. Wie oben bereits ausgeführt, können derartige Stellantriebe oftmals in Anlagen für die Heizung, Lüftung oder Kühlung in einem Gebäude eingesetzt werden. Aus diesem Grund ist oftmals eine Anforderung an derartige Stellantriebe, dass diese zuverlässig, beständig, preiswert, kompakt und in großem Volumen herstellbar sind.

Wie oben bereits beschrieben, kann ein Stellantrieb bevorzugt durch eine Rückstellfeder in eine Start- bzw. Ruheposition des Stellelements gebracht werden. Gemäß dem Stand der Technik wird bevorzugt als Rückstellfeder zumeist eine vorgespannte Rollfeder mit einer Vielzahl von Windungen eingesetzt, um einen möglichst linearen Kraftverlauf zu erzielen, mit anderen Worten, um eine möglichst geringe Abhängigkeit der durch die Rückstellfeder bereitgestellten Rückstellkraft von einer Auslenkung beziehungsweise einem Drehwinkel des Stellelements zu erzielen. Durch die Vielzahl der Windungen weist die gemäß dem Stand der Technik verwendete Rollfeder eine sogenannte weiche, insbesondere flache Kennlinie auf. Nachteilig hierbei ist jedoch, dass eine derartige Rollfeder mit einer Vielzahl von Windungen mechanisch aufwendig und insbesondere von hohem Gewicht ist.

Es ist daher Aufgabe der vorliegenden Erfindung, die voranstehend beschriebenen Nachteile bei Stellantrieben zumindest teilweise zu beheben. Insbesondere ist es Aufgabe der vorliegenden Erfindung, einen Stellantrieb bereitzustellen und/oder zu verbessern, der auf einfache und kostengünstige Art und Weise eine möglichst kompakte Bauweise und/oder eine Rückstellkraft mit möglichst linearem Kraftverlauf bereitstellt.

Voranstehende Aufgabe wird gelöst durch einen Stellantrieb mit den Merkmalen des unabhängigen Anspruchs 1. Weitere Merkmale und Details der Erfindung ergeben sich aus den Unteransprüchen, der Beschreibung und den Zeichnungen.

Gemäß einem Aspekt der Erfindung wird die Aufgabe gelöst durch einen Stellantrieb, bei dem das Antriebszahnrad, der Antriebszahnabschnitt, der Abtriebszahnabschnitt und das Abtriebszahnrad in derselben Wirkebene angeordnet sind.

Ein erfindungsgemäßer Stellantrieb kann beispielsweise in Anlagen für eine Heizung, Lüftung oder Kühlung in einem Gebäude eingesetzt werden. Dafür weist ein erfindungsgemäßer Stellantrieb insbesondere ein Antriebselement, einen Übertragungsabschnitt und ein Stellelement auf. Durch das Antriebselement, beispielsweise ein Elektromotor, ein pneumatischer oder hydraulischer Hubzylinder, wird die Bewegung des Stellelements hervorgerufen, wobei der Übertragungsabschnitt eine mechanische Wirkverbindung zwischen dem Antriebselement und dem Stellelement herstellt. Das Stellelement kann wiederum beispielsweise mit einer Klappe oder einem Ventil mechanisch wirkverbunden sein, um diese Klappe bzw. das Ventil zu stellen. Auch eine zumindest teilweise Integration des Stellelements in eine Klappe bzw. ein Ventil ist denkbar. Darüber hinaus weist der erfindungsgemäße Stellantrieb eine Rückstellfeder auf, durch die eine auf das Stellelement wirkende Schließkraft bereitgestellt werden kann. Für diesen Zweck ist die Rückstellfeder mit dem Stellelement mechanisch wirkverbunden. So kann beispielsweise die Rückstellfeder direkt am Stellelement angeordnet sein oder aber auch beispielsweise an einem Abschnitt des Übertragungsabschnitts, wodurch der Übertragungsabschnitt auch eine mechanische Wirkverbindung zwischen der Rückstellfeder und dem Stellelement herstellt. Ferner kann der Übertragungsabschnitt bevorzugt als ein Zahnradgetriebe, besonders bevorzugt als ein Reduktionsgetriebe ausgebildet sein. Ein beispielsweise schnelldrehender Elektromotor als Antriebselement kann auf diese Weise in eine langsame, jedoch mit hohem Drehmoment ausgestattete Bewegung des Stellelements umgesetzt werden.

Bei einem erfindungsgemäßen Stellantrieb ist vorgesehen, dass der Übertragungsabschnitt speziell ausgebildet ist. Der Übertragungsabschnitt weist insbesondere ein Antriebszahnrad, ein Übertragungszahnrad und ein Abtriebszahnrad auf. Die Zahnräder, insbesondere das Übertragungszahnrad, können beispielsweise geschmiedet, gestanzt oder als zusammengefügtes Blechpaket ausgebildet sein. Auch eine Herstellung in einem additiven Verfahren wie beispielsweise Lasersintern oder 3D-Druck ist für eine Herstellung der Zahnräder, insbesondere des Übertragungszahnrads, denkbar. Die drei genannten Zahnräder sind insbesondere mechanisch miteinander wirkverbunden, wobei das Antriebszahnrad und das Übertragungszahnrad sowie das Übertragungszahnrad und das Abtriebszahnrad jeweils paarweise kämmend ineinandergreifen. Für diesen Zweck weist das Übertragungszahnrad insbesondere einen Antriebszahnabschnitt und einen Abtriebszahnabschnitt auf. Erfindungswesentlich weisen der Antriebszahnabschnitt und der Abtriebszahnabschnitt jeweils eine Übertragungsfunktion auf, wobei sich diese Übertragungsfunktionen der beiden Zahnabschnitte unterscheiden. Als Übertragungsfunktion im Sinne der Erfindung wird insbesondere verstanden, wie sich ein Übersetzungsverhältnis des jeweiligen Zahnabschnitts und des beteiligen weiteren Zahnrads mit dem Drehwinkel verändert. Sind beispielsweise beide beteiligten Zahnräder beziehungsweise Zahnradsegmente kreisförmig, so ist das Übersetzungsverhältnis konstant in Bezug auf den Drehwinkel. Bei beispielsweise zwei elliptischen Zahnrädern beziehungsweise Zahnradsegmenten ist das Übersetzungsverhältnis und damit die Übertragungsfunktion jedoch vom Drehwinkel abhängig, sodass sich für verschiedene Drehwinkel unterschiedliche Übersetzungsverhältnisse ergeben. Auch sind insbesondere weitere spezielle Anpassungen der Übertragungsfunktionen denkbar, beispielsweise für eine Bereitstellung einer höheren Drehgeschwindigkeit für einen bestimmten Drehwinkelbereich oder eine gezielte Erhöhung eines Drehmoments, insbesondere beispielsweise an den Rändern eines eingesetzten Drehwinkelbereichs, um ein Schließen und/oder Öffnen des Stellelements besonders sicher auszugestalten. Mit anderen Worten ist das Übertragungszahnrad eines Übertragungsabschnitts eines erfindungsgemäßen Stellantriebs derart ausgebildet, dass es zwei Übertragungsfunktionen bereitstellt, eine erste Übertragungsfunktion hinsichtlich der Wirkverbindung mit dem Antriebszahnrad und eine zweite Übertragungsfunktion hinsichtlich der Wirkverbindung mit dem Abtriebszahnrad. Durch das Unterscheiden dieser beiden Übertragungsfunktionen ist es möglich, durch nur dieses eine Übertragungszahnrad eine gesamte Übertragungsfunktion des Übertragungsabschnitts in einer Weise zu verändern, für die man gemäß dem Stand der Technik zumindest zwei separate Zahnradpaare benötigen würde. Bereits dies bringt eine größere Kompaktheit eines erfindungsgemäßen Stellantriebs mit sich.

Darüber hinaus ist erfindungswesentlich vorgesehen, dass sich das Antriebszahnrad, der Antriebszahnabschnitt, der Abtriebszahnabschnitt und das Abtriebszahnrad in derselben Wirkebene befinden. Mit anderen Worten existiert eine gemeinsame Ebene, im Sinne der Erfindung mit Wirkebene bezeichnet, in der das Antriebszahnrad, das Übertragungszahnrad mit seinem Antriebszahnabschnitt und seinem Abtriebszahnabschnitt und das Abtriebszahnrad angeordnet sind. Eine weitere Steigerung der Kompaktheit eines erfindungsgemäßen Stellantriebs kann auf diese Weise bereitgestellt werden. Insgesamt kann somit ein erfindungsgemäßer Stellantrieb besonders einfach und insbesondere kompakt und dadurch mit geringem Bauraumbedarf bereitgestellt werden.

Auch kann ein erfindungsgemäßer Stellantrieb dahin gehend ausgebildet sein, dass die Rückstellfeder eine drehwinkelabhängige Rückstellkraft bereitstellt, wobei zum Bereitstellen einer konstanten oder wenigstens im Wesentlichen konstanten Schließkraft der Antriebszahnabschnitt eine erste Übertragungsfunktion und/oder der Abtriebszahnabschnitt eine zweite

Übertragungsfunktion zum zumindest teilweisen Ausgleichen der Drehwinkelabhängigkeit der Rückstellkraft aufweist. Eine derartige drehwinkelabhängige Rückstellkraft kann insbesondere bedeuten, dass sich die bereitgestellte Rückstellkraft mit dem Drehwinkel deutlich ändert. Insbesondere bei Rückstellfedern, die eine hohe Federhärte aufweisen, kann dies der Fall sein. Eine übermäßige und insbesondere deutlich drehwinkelabhängige Beanspruchung des Antriebselements, das eine Bewegung des Stellelements entgegen der Schließkraft der Rückstellfeder bereitstellen muss, kann die Folge sein. Um dies zumindest teilweise zu beheben, kann erfindungsgemäß vorgesehen sein, dass die erste Übertragungsfunktion des Antriebszahnabschnitts und/oder bevorzugt die zweite Übertragungsfunktion des Abtriebszahnabschnitts derart ausgebildet ist, dass durch diese ebenfalls drehwinkelabhängige Übertragungsfunktion die Drehwinkelabhängigkeit der Rückstellkraft zumindest teilweise ausgeglichen werden kann. Auf diese Weise kann bereitgestellt werden, dass die vom Antriebselement aufgebrachte Bewegungsenergie gegen eine nun drehwinkelunabhängige oder zumindest im Wesentlichen drehwinkelunabhängige Schließkraft angehen muss, wodurch das bereitgestellte Antriebselement selbst einfacher ausgestaltet werden kann.

Auch kann ein erfindungsgemäßer Stellantrieb dahin gehend weiterentwickelt sein, dass die Rückstellfeder als eine Schraubenfeder oder als eine Spiralfeder ausgebildet ist. Eine derartige Schraubenfeder oder Spiralfeder weist, insbesondere wenn jeweils nur wenige Windungen vorhanden sind, eine besonders hohe Federhärte auf. Gleichzeitig weist eine derartige Schraubenfeder oder Spiralfeder zumeist eine hohe Federhärte auf, sodass eine geforderte Schließkraft bereits mit einer geringen Anzahl an Windungen dennoch bereitgestellt werden kann. Die geringe Anzahl der Windungen wiederum hat jedoch den Vorteil, dass derartige Schraubenfedern oder Spiralfedern im Vergleich zu den im Stand der Technik verwendeten Rollfedern besonders klein, leicht und platzsparend ausgebildet sein können. Eine Verringerung eines Bauraumbedarfs bei einem erfindungsgemäßen Stellantrieb kann dadurch weiter bereitgestellt werden.

Darüber hinaus kann ein erfindungsgemäßer Stellantrieb dahin gehend ausgebildet sein, dass das Übertragungszahnrad zumindest einen zwischen dem Antriebszahnabschnitt und dem Abtriebszahnabschnitt angeordneten zahnlosen Abstandsabschnitt aufweist. Auf diese Weise ist es möglich, den Antriebszahnabschnitt und den Abtriebszahnabschnitt am Umfang des Übertragungszahnrads voneinander räumlich zu trennen. Ein Übersprechen bzw. ein Überdrehen des Übertragungszahnrads dahin gehend, dass der Antriebszahnabschnitt dem Abtriebszahnrad und/oder der Abtriebszahnabschnitt dem Antriebszahnrad zugeführt werden könnte, kann auf diese Weise sicher vermieden werden.

Bevorzugt kann beim erfindungsgemäßen Stellantrieb ferner vorgesehen sein, dass der Antriebszahnabschnitt kreissegmentförmig und/oder der Abtriebszahnabschnitt ellipsensegmentförmig ausgebildet ist. Durch einen kreissegmentförmigen Antriebszahnabschnitt kann besonders einfach eine Integration des Übertragungszahnrads in den restlichen, bevorzugt als Getriebe mit kreisförmigen Zahnrädern ausgebildeten Übertragungsabschnitt bereitgestellt werden. Ein ellipsensegmentförmiger Abtriebszahnabschnitt wiederum stellt eine besonders einfache Möglichkeit dar, um eine drehwinkelabhängige Übertragungsfunktion und damit einen wie oben beschriebenen Ausgleich einer drehwinkelabhängigen Rückstellkraft einer Rückstellfeder bereitzustellen. Insbesondere ist auch jede Übertragungsfunktion eines kreissegmentförmigen Zahnabschnitts unterschiedlich zu einer Übertragungsfunktion eines ellipsensegmentförmigen Zahnabschnitts.

Besonders bevorzugt kann beim erfindungsgemäßen Stellantrieb ferner vorgesehen sein, dass der Antriebszahnabschnitt kreissegmentförmig bezüglich eines Kreismittelpunkts ausgebildet ist, wobei eine Drehachse des Übertragungszahnrads durch den Kreismittelpunkt geht. Wie oben bereits beschrieben, kann durch einen kreissegmentförmigen Antriebszahnabschnitt eine besonders einfache Integration des Übertragungszahnrads in einem als Getriebe ausgebildeten Übertragungsabschnitt bereitgestellt werden. Insbesondere durch eine Drehachse des Übertragungszahnrads, das durch einen Kreismittelpunkt dieses kreissegmentförmig ausgebildeten Antriebszahnabschnitts geht, kann dies weiter unterstützt werden. Das Übertragungszahnrad hat, zumindest über denjenigen Drehwinkelbereich, den der Antriebszahnabschnitt überstreicht, dieselben Eigenschaften und Wirkungen, wie ein kreisförmiges Übertragungszahnrad, als Teil eines Getriebes des Übertragungsabschnitts.

Gemäß einer Weiterentwicklung eines erfindungsgemäßen Stellantriebs kann ferner vorgesehen sein, dass der Abtriebszahnabschnitt ellipsensegmentförmig bezüglich eines Ellipsenmittelpunkts ausgebildet ist, wobei der Ellipsenmittelpunkt dem Kreismittelpunkt entspricht. In dieser Weiterentwicklung eines erfindungsgemäßen Stellantriebs ist nun neben dem kreissegmentförmigen Antriebszahnabschnitt ein Abtriebszahnabschnitt vorgesehen, der ellipsensegmentförmig ausgebildet ist. Insbesondere ist dieser ellipsensegmentförmige Abtriebszahnabschnitt dabei derart am Übertragungszahnrad vorgesehen, dass ein Mittelpunkt der Ellipse, die dem Ellipsensegment des Abtriebszahnabschnitts entspricht, mit dem Kreismittelpunkt, der gleichzeitig die Drehachse des Übertragungszahnrads bildet, zusammenfällt. Dies stellt eine erste mögliche bevorzugte alternative Ausgestaltung eines Übertragungsabschnitts eines erfindungsgemäßen Stellantriebs dar.

Gemäß einer zweiten, alternativen Ausgestaltungsform eines erfindungsgemäßen Stellantriebs kann ferner vorgesehen sein, dass der Abtriebszahnabschnitt ellipsensegmentförmig bezüglich eines Ellipsenbrennpunkts ausgebildet ist, wobei eine Drehachse des Übertragungszahnrads durch diesen Ellipsenbrennpunkt geht. Dies stellt eine weitere Möglichkeit dar, einen ellipsensegmentförmigen Abtriebszahnabschnitt am Übertragungszahnrad vorzusehen. Im Gegensatz zur oben beschriebenen Ausgestaltungsform bestimmt nun nicht der Ellipsenmittelpunkt die Drehachse des Übertragungszahnrads, sondern einer der Ellipsenbrennpunkte. Auch auf diese Weise kann eine Übertragungsfunktion definiert werden, die durch ein entsprechendes Abtriebszahnrad komplettiert werden kann.

Auch kann diese Ausgestaltungsform eines erfindungsgemäßen Stellantriebs dahin gehend weiterentwickelt sein, dass der Antriebszahnabschnitt kreissegmentförmig bezüglich eines Kreismittelpunkts ausgebildet ist, wobei der Kreismittelpunkt dem Ellipsenbrennpunkt entspricht. Auch in dieser Ausgestaltungsform eines erfindungsgemäßen Stellantriebs kann durch einen kreissegmentförmig ausgebildeten Antriebszahnabschnitt eine Integration in einen Übertragungsabschnitt, der als Getriebe ausgebildet ist, besonders einfach bereitgestellt werden. Dadurch, dass der Ellipsenbrennpunkt und der Kreismittelpunkt zusammenfallen, können die oben bezüglich einer Drehachse durch den Kreismittelpunkt beschriebenen Vorteile auch in dieser Ausgestaltungsform bereitgestellt werden.

Ferner kann beim erfindungsgemäßen Stellantrieb vorgesehen sein, dass das Abtriebszahnrad einen bezahnten Zahnabschnitt zum kämmenden Eingreifen in den Abtriebszahnabschnitt des Übertragungszahnrads und einen unbezahnten Freiabschnitt aufweist. Mit anderen Worten weist auch das Abtriebszahnrad einen Bereich auf, der unbezahnt bleibt. Das Abtriebszahnrad kann auf diese Weise einfacher und platzsparender ausgebildet werden.

Besonders bevorzugt kann ferner beim erfindungsgemäßen Stellantrieb vorgesehen sein, dass das Stellelement zumindest teilweise durch das Antriebszahnrad gebildet ist. Durch diese Integration des Stellelements in das Antriebszahnrad bzw. eine zumindest teilweise einstückige bzw. einteilige Ausgestaltung des Stellelements mit dem Antriebszahnrad kann eine Kompaktheit eines erfindungsgemäßen Stellantriebs weiter gesteigert werden. Eine noch geringere Bauraumanforderung eines erfindungsgemäßen Stellantriebs kann dadurch bereitgestellt werden.

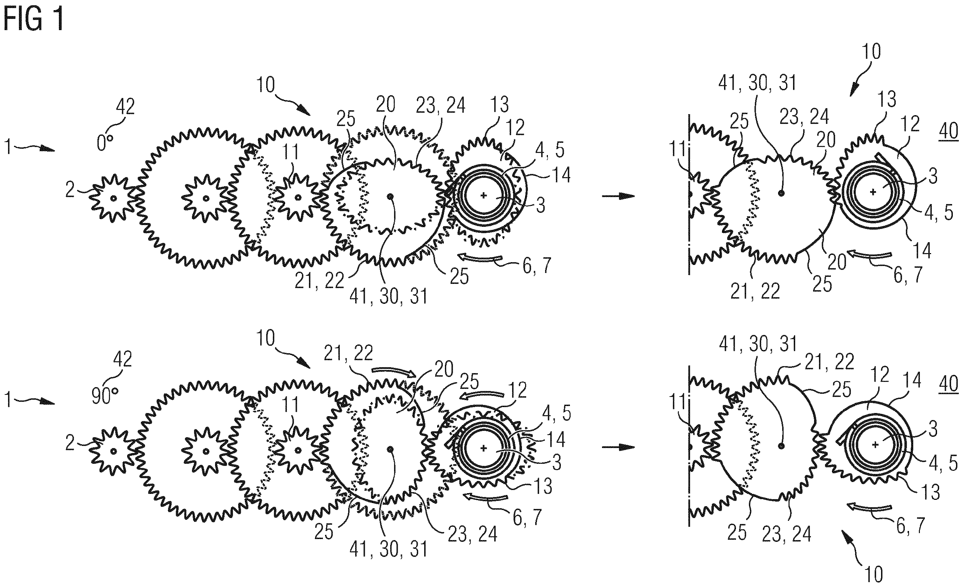

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und die in der Beschreibung erwähnten Merkmale jeweils einzeln für sich oder in beliebiger Kombination erfindungswesentlich sein. Elemente mit gleicher Funktion und Wirkungsweise sind in den Figuren 1 bis 3 jeweils mit denselben Bezugszeichen versehen. Es zeigen schematisch:
- Fig. 1: eine erste Ausgestaltungsform eines erfindungsgemäßen Stellantriebs,
- Fig. 2: eine zweite Ausgestaltungsform eines erfindungsgemäßen Stellantriebs, und
- Fig. 3: Drehwinkelabhängigkeiten einer Übertragungsfunktion und einer Rückstellkraft.

Fig. 1 zeigt eine erste mögliche Ausgestaltungsform eines erfindungsgemäßen Stellantriebs 1. Auf der linken Seite der Abbildung sind zwei mögliche Drehwinkel (0°, 90°) des Stellelements 3 gezeigt, wobei die Abbildungen rechts daneben jeweils Detailansichten, insbesondere des Übertragungszahnrads 20 zeigen. Der dargestellte Stellantrieb 1 weist insbesondere ein Antriebselement 2 auf, das in dieser Ausgestaltungsform als ein Elektromotor ausgebildet ist. Ein Übertragungsabschnitt 10, aufweisend insbesondere ein als Reduktionsgetriebe ausgebildetes Getriebe, ermöglicht eine mechanische Wirkverbindung mit einem Stellelement 3. Ebenfalls mit dem Stellelement 3 wirkverbunden ist eine Rückstellfeder 4, die in der dargestellten Ausgestaltungsform als Spiralfeder 5 ausgebildet ist. Der Übertragungsabschnitt 10 weist insbesondere neben anderen Getriebezahnrädern ein Antriebszahnrad 11, ein Abtriebszahnrad 12 sowie ein Übertragungszahnrad 20 auf. In den beiden linken Darstellungen ist das Übertragungszahnrad 20 durchgezogen gezeigt. Das Übertragungszahnrad 20 weist insbesondere einen Antriebszahnabschnitt 21 und einen Abtriebszahnabschnitt 23 auf. Der Antriebszahnabschnitt 21 entspricht insbesondere mit seiner ersten Übertragungsfunktion 22 einem kreisförmigen Zahnrad, das punkt-punkt-gestrichelt ebenfalls dargestellt ist. Der Abtriebszahnabschnitt 23 entspricht mit seiner zweiten Übertragungsfunktion 24 einem elliptischen Zahnrad, das punkt-gestrichelt ebenfalls dargestellt ist. In den rechten Abbildungen ist jeweils nur das resultierende Übertragungszahnrad 20 gezeigt. In der dargestellten Ausgestaltungsform sind insbesondere der Antriebszahnabschnitt 21 sowie der Abtriebszahnabschnitt 23 jeweils durch Abstandsabschnitte 25 voneinander getrennt, sodass ein Übersprechen der beiden Zahnabschnitte 21, 23 vermieden werden kann. Ferner ist in der dargestellten Ausgestaltungsform insbesondere die Drehachse 41 des Übertragungszahnrads 20 sowohl entsprechend dem Kreismittelpunkt 30 des kreissegmentförmigen Antriebszahnabschnitts 21 als auch des Ellipsenmittelpunkts 31 des ellipsensegmentförmigen Abtriebszahnabschnitts 23 ausgebildet. Das Abtriebszahnrad 12 ist entsprechend ebenfalls ellipsenförmig ausgebildet. Darüber hinaus weist das Abtriebszahnrad 12 ebenfalls einen Zahnabschnitt 13 und einen Freiabschnitt 14 auf, der ohne Zähne ausgebildet ist. Die Herstellung eines Abtriebszahnrads 12 kann auf diese Weise vereinfacht werden. Dadurch, dass die erste Übertragungsfunktion 22 und die zweite Übertragungsfunktion 24 unterschiedlich ausgebildet sind, kann insbesondere bereitgestellt werden, dass sich allein durch das Übertragungszahnrad 20 die gesamte Übertragungsfunktion 22, 24 des Übertragungsabschnitts 10 ändert. Insbesondere kann bevorzugt beispielsweise in dieser Ausgestaltungsform die zweite Übertragungsfunktion 24 derart angepasst ausgebildet sein, dass eine drehwinkelabhängige Schließkraft 6 der Spiralfeder 5 ausgeglichen oder zumindest im Wesentlichen ausgeglichen werden kann. Das Antriebselement 2 muss in diesem Fall somit nur gegen eine konstante Rückstellkraft 7 bzw. Schließkraft 6 antreiben, wodurch das Antriebselement 2 einfacher ausgestaltet werden kann. Ferner ist auf der rechten Seite angedeutet, dass das Antriebszahnrad 11, der Antriebszahnabschnitt 21 und der Abtriebszahnabschnitt 23 des Übertragungszahnrads 20 sowie das Abtriebszahnrad 12 in einer gemeinsamen Wirkebene 40 angeordnet sind. Auch auf diese Weise kann bereitgestellt werden, dass der gesamte erfindungsgemäße Stellantrieb 1 kompakter ausgebildet sein kann.

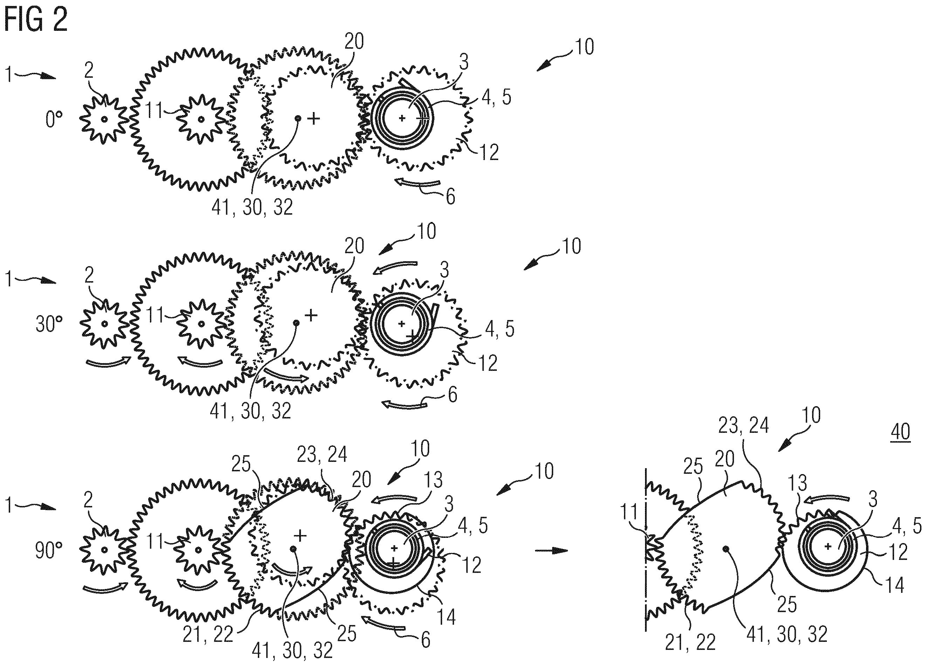

Fig. 2 zeigt Darstellungen einer weiteren möglichen Ausgestaltungsform eines erfindungsgemäßen Stellantriebs 1. In Fig. 2 sind nun die Drehwinkel 0°, 30° und 90° des Stellelements 3 gezeigt, wobei für den Drehwinkel 90° auch das resultierende Übertragungszahnrad 20 in einer weiteren rechten Abbildung gezeigt ist. Im Gegensatz zu der in Fig. 1 gezeigten Ausgestaltungsform eines erfindungsgemäßen Stellantriebs 1 ist hier nun die Drehachse 41 des Übertragungszahnrads 20 entsprechend eines Kreismittelpunkts 30 eines kreissegmentförmigen Antriebszahnabschnitts 21 und eines Ellipsenbrennpunkts 32 eines ellipsensegmentförmigen Abtriebszahnabschnitts 23 ausgebildet. Auch dies stellt eine mögliche Ausgestaltungsform eines erfindungsgemäßen Stellantriebs 1 dar. Bezüglich der weiteren Einzelheiten wird auf die entsprechend analogen Elemente des in Fig. 1 gezeigten Stellantriebs 1 verwiesen.

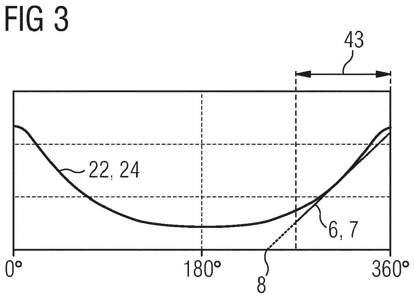

Fig. 3 zeigt eine Auftragung gegen einen Drehwinkel 42 sowohl einer Übertragungsfunktion 22, 24 als auch einer Schließkraft 6 bzw. Rückstellkraft 7. Deutlich zu sehen ist, dass im verwendeten Drehwinkelbereich 43 die drehwinkelabhängige Übertragungsfunktion 22, 24 durch die drehwinkelabhängige Schließkraft 6 bzw. Rückstellkraft 7 angenähert werden kann. Mit anderen Worten kann, wie dargestellt, durch eine entsprechend gewählte Übertragungsfunktion 22, 24 eine drehwinkelabhängige Schließkraft 6 bzw. Rückstellkraft 7 kompensiert oder zumindest im Wesentlichen kompensiert werden. Um eine besonders gute Kompensation zu erreichen, kann ferner bei der Rückstellfeder 4 eine Vorspannung 8 vorgesehen sein.

### Bezugszeichenliste

- 1: Stellantrieb
- 2: Antriebselement
- 3: Stellelement
- 4: Rückstellfeder
- 5: Spiralfeder
- 6: Schließkraft
- 7: Rückstellkraft
- 8: Vorspannung

- 10: Übertragungsabschnitt
- 11: Antriebszahnrad
- 12: Abtriebszahnrad
- 13: Zahnabschnitt
- 14: Freiabschnitt

- 20: Übertragungszahnrad
- 21: Antriebszahnabschnitt
- 22: erste Übertragungsfunktion
- 23: Abtriebszahnabschnitt
- 24: zweite Übertragungsfunktion
- 25: Abstandsabschnitt

- 30: Kreismittelpunkt
- 31: Ellipsenmittelpunkt
- 32: Ellipsenbrennpunkt

- 40: Wirkebene
- 41: Drehachse
- 42: Drehwinkel
- 43: Drehwinkelbereich

## Patentansprüche

1. Stellantrieb (1), aufweisend ein Antriebselement (2), einen Übertragungsabschnitt (10) und ein Stellelement (3), wobei das Antriebselement (2) zum Antreiben des Stellelements (3) mit dem Stellelement (3) durch den Übertragungsabschnitt (10) mechanisch wirkverbunden ist, der Stellantrieb (1) ferner aufweisend eine Rückstellfeder (4), die zum Bereitstellen einer auf das Stellelement (3) wirkenden Schließkraft (6) mit dem Stellelement (3) mechanisch wirkverbunden ist, wobei der Übertragungsabschnitt (10) zumindest ein Antriebszahnrad (11), ein Übertragungszahnrad (20) und ein Abtriebszahnrad (12) aufweist, das Übertragungszahnrad (20) aufweisend einen Antriebszahnabschnitt (21) und einen Abtriebszahnabschnitt (23), wobei der Antriebszahnabschnitt (21) mit einer ersten Übertragungsfunktion (22) kämmend in das Antriebszahnrad (11) sowie der Abtriebszahnabschnitt (23) mit einer zweiten Übertragungsfunktion (24) kämmend in das Abtriebszahnrad (12) eingreift, und wobei ferner die erste Übertragungsfunktion (22) und die zweite Übertragungsfunktion (24) unterschiedlich sind,
**dadurch gekennzeichnet,**
**dass** das Antriebszahnrad (11), der Antriebszahnabschnitt (21), der Abtriebszahnabschnitt (23) und das Abtriebszahnrad (12) in derselben Wirkebene (40) angeordnet sind.

2. Stellantrieb (1) nach Anspruch 1,
**dadurch gekennzeichnet,**
**dass** die Rückstellfeder (4) eine drehwinkelabhängige Rückstellkraft (7) bereitstellt, wobei zum Bereitstellen einer konstanten oder wenigstens im Wesentlichen konstanten Schließkraft (6) der Antriebszahnabschnitt (21) eine erste Übertragungsfunktion (22) und/oder der Abtriebszahnabschnitt (23) eine zweite Übertragungsfunktion (24) zum zumindest teilweisen Ausgleichen der Drehwinkelabhängigkeit der Rückstellkraft (7) aufweist.

3. Stellantrieb (1) nach Anspruch 2,
**dadurch gekennzeichnet,**
**dass** die Rückstellfeder (4) als eine Schraubenfeder oder als eine Spiralfeder (5) ausgebildet ist.

4. Stellantrieb (1) nach einem der vorangegangenen Ansprüche, **dadurch gekennzeichnet,**
**dass** das Übertragungszahnrad (20) zumindest einen zwischen dem Antriebszahnabschnitt (21) und dem Abtriebszahnabschnitt (23) angeordneten zahnlosen Abstandsabschnitt (25) aufweist.

5. Stellantrieb (1) nach einem der vorangegangenen Ansprüche, **dadurch gekennzeichnet,**
**dass** der Antriebszahnabschnitt (21) kreissegmentförmig und/oder der Abtriebszahnabschnitt (23) ellipsensegmentförmig ausgebildet ist.

6. Stellantrieb (1) nach einem der vorangegangenen Ansprüche, **dadurch gekennzeichnet,**
**dass** der Antriebszahnabschnitt (21) kreissegmentförmig bezüglich eines Kreismittelpunkts (30) ausgebildet ist, wobei eine Drehachse (41) des Übertragungszahnrads (20) durch den Kreismittelpunkt (30) geht.

7. Stellantrieb (1) nach Anspruch 6,
**dadurch gekennzeichnet,**
**dass** der Abtriebszahnabschnitt (23) ellipsensegmentförmig bezüglich eines Ellipsenmittelpunkts (31) ausgebildet ist, wobei der Ellipsenmittelpunkt (31) dem Kreismittelpunkt (30) entspricht.

8. Stellantrieb (1) nach einem der vorangegangenen Ansprüche 1 bis 6,
**dadurch gekennzeichnet,**
**dass** der Abtriebszahnabschnitt (23) ellipsensegmentförmig bezüglich eines Ellipsenbrennpunkts (32) ausgebildet ist, wobei eine Drehachse (41) des Übertragungszahnrads (20) durch diesen Ellipsenbrennpunkt (32) geht.

9. Stellantrieb (1) nach Anspruch 8,
**dadurch gekennzeichnet,**
**dass** der Antriebszahnabschnitt (21) kreissegmentförmig bezüglich eines Kreismittelpunkts (30) ausgebildet ist, wobei der Kreismittelpunkt (30) dem Ellipsenbrennpunkt (32) entspricht.

10. Stellantrieb (1) nach einem der vorangegangenen Ansprüche,
**dadurch gekennzeichnet,**
**dass** das Abtriebszahnrad (12) einen bezahnten Zahnabschnitt (13) zum kämmenden Eingreifen in den Abtriebszahnabschnitt (23) des Übertragungszahnrads (20) und einen unbezahnten Freiabschnitt (14) aufweist.

11. Stellantrieb (1) nach einem der vorangegangenen Ansprüche,
**dadurch gekennzeichnet,**
**dass** das Stellelement (3) zumindest teilweise durch das das Abtriebszahnrad (12) gebildet ist.

## Claims

1. Actuating drive (1), having a drive element (2), a transmission section (10) and an actuating element (3), wherein the drive element (2), for driving the actuating element (3), is mechanically operatively connected to the actuating element (3) through the transmission section (10), the actuating drive (1) further having a return spring (4), which is mechanically operatively connected to the actuating element (3) for providing a closing force (6) acting on the actuating element (3), wherein the transmission section (10) has at least one drive gear wheel (11), a transmission gear wheel (20) and an output drive gear wheel (12), the transmission gear wheel (20) having a drive gear section (21) and a output drive gear section (23), wherein the drive gear section (21) makes a meshed engagement with a first transmission function (22) into the drive gear wheel (11) and also the output drive gear section (23) makes a meshed engagement with a second transmission function (24) into the output drive gear wheel (12), and wherein the first transmission function (22) and the second transmission function (24) are also different,
**characterised in that**
the drive gear wheel (11), the drive gear section (21), the output drive gear section (23) and the output drive gear wheel (12) are arranged in the same plane of action (40).

2. Actuating drive (1) according to claim 1,
**characterised in that**
the return spring (4) provides a rotation angle-dependent return force (7), wherein, to provide a constant or at least essentially constant closing force (6), the drive gear section (21) has a first transmission function (22) and/or the output drive gear section (23) has a second transmission function (24) for at least partly compensating for the rotation angle dependency of the return force (7).

3. Actuating drive (1) according to claim 2,
**characterised in that**
the return spring (4) is embodied as a coil spring or as a spiral spring (5).

4. Actuating drive (1) according to one of the preceding claims, **characterised in that**
the transmission gear wheel (20) has at least one spacer section (25) without teeth arranged between the drive gear section (21) and the output drive gear section (23).

5. Actuating drive (1) according to one of the preceding claims, **characterised in that**
the drive gear section (21) is embodied in the shape of a circle sector and/or the output drive gear section (23) is embodied in the shape of an ellipse segment.

6. Actuating drive (1) according to one of the preceding claims, **characterised in that**
the drive gear section (21) is embodied in the shape of a circle segment in relation to a centre point of the circle (30), wherein an axis of rotation (41) of the transmission gear wheel (20) goes through the centre point of the circle (30).

7. Actuating drive (1) according to claim 6,
**characterised in that**
the output drive gear section (23) is embodied in the shape of an ellipse segment in relation to an ellipse centre point (31), wherein the ellipse centre point (31) corresponds to the centre point of the circle (30).

8. Actuating drive (1) according to one of the preceding claims 1 to 6,
**characterised in that**
the output drive section (23) is embodied in the shape of an ellipse segment in relation to an ellipse focal point (32), wherein an axis of rotation (41) of the transmission gear wheel (20) goes through this ellipse focal point (32).

9. Actuating drive (1) according to claim 8,
**characterised in that**
the drive gear section (21) is embodied in the shape of a circle segment in relation to a centre point of the circle (30), wherein the centre point of the circle (30) corresponds to the ellipse focal point (32).

10. Actuating drive (1) according to one of the preceding claims, **characterised in that**
the output drive gear wheel (12) has a toothed gear section (13) for meshing engagement into the output drive gear section (23) of the transmission gear wheel (20) and a non-toothed free section (14) .

11. Actuating drive (1) according to one of the preceding claims, **characterised in that**
the actuating element (3) is formed at least partly by the output drive gear wheel (12).

## Revendications

1. Actionneur (1) présentant un élément d'entraînement (2), une section de transmission (10) et un élément d'actionnement (3), dans lequel l'élément d'entraînement (2) est relié de manière opérationnelle mécaniquement à l'élément d'actionnement (3) par la section de transmission (10) afin d'entraîner l'élément d'actionnement (3), l'actionneur (1) présentant en outre un ressort de rappel (4) qui est relié de manière opérationnelle mécaniquement à l'élément d'actionnement (3) afin de fournir une force de fermeture (6) agissant sur l'élément d'actionnement (3), dans lequel la section de transmission (10) présente au moins une roue dentée d'entraînement (11), une roue dentée de transmission (20) et une roue dentée de sortie (12), la roue dentée de transmission (20) présentant une section de roue dentée d'entraînement (21) et une section de roue dentée de sortie (23), dans lequel la section de roue dentée d'entraînement (21) vient en prise avec la roue dentée d'entraînement (11) avec une première fonction de transmission (22) et la section de roue dentée de sortie (23) vient en prise avec la roue dentée de sortie (12) avec une seconde fonction de transmission (24), et dans lequel en outre la première fonction de transmission (22) et la seconde fonction de transmission (24) sont différentes,
**caractérisé en ce que**,
la roue dentée d'entraînement (11), la section de roue dentée d'entraînement (21), la section de roue dentée de sortie (23) et la roue dentée de sortie (12) sont agencées dans le même plan de travail (40).

2. Actionneur (1) selon la revendication 1,
**caractérisé en ce que**,
le ressort de rappel (4) fournit une force de rappel (7) dépendant d'un angle de rotation, dans lequel la section de roue dentée d'entraînement (21) présente une première fonction de transmission (22) et/ou la section de roue dentée d'entraînement (23) présente une seconde fonction de transmission (24) permettant de compenser au moins de manière partielle la dépendance à un angle de rotation de la force de rappel (7) afin de fournir une force de fermeture (6) constante ou au moins sensiblement constante.

3. Actionneur (1) selon la revendication 2,
**caractérisé en ce que**,
le ressort de rappel (4) est réalisé sous la forme d'un ressort hélicoïdal ou d'un ressort en spirale (5).

4. Actionneur (1) selon l'une quelconque des revendications précédentes,
**caractérisé en ce que**,
la roue dentée de transmission (20) présente au moins une section d'écartement sans dent (25) agencée entre la section de roue dentée d'entraînement (21) et la section de roue dentée de sortie (23).

5. Actionneur (1) selon l'une quelconque des revendications précédentes,
**caractérisé en ce que**,
la section de roue dentée d'entraînement (21) est conçue sous la forme d'un segment circulaire et/ou la section de roue dentée de sortie (23) est conçue sous la forme d'un segment elliptique.

6. Actionneur (1) selon l'une quelconque des revendications précédentes,
**caractérisé en ce que**,
la section de roue dentée d'entraînement (21) est conçue sous la forme d'un segment circulaire par rapport à un centre de cercle (30), dans lequel un axe de rotation (41) de la roue dentée de transmission (20) passe par le centre de cercle (30).

7. Actionneur (1) selon la revendication 6,
**caractérisé en ce que**,
la section de roue dentée de sortie (23) est conçue sous la forme d'un segment elliptique par rapport à un centre d'ellipse (31), dans lequel le centre d'ellipse (31) correspond au centre de cercle (30).

8. Actionneur (1) selon l'une quelconque des revendications précédentes 1 à 6,
**caractérisé en ce que**,
la section de roue dentée de sortie (23) est conçue sous la forme d'un segment elliptique par rapport à un foyer d'ellipse (32), dans lequel un axe de rotation (41) de la roue dentée de transmission (20) passe par le foyer d'ellipse (32).

9. Actionneur (1) selon la revendication 8,
**caractérisé en ce que**,
la section de roue dentée d'entraînement (21) est conçue sous la forme d'un segment circulaire par rapport à un centre de cercle (30), dans lequel le centre de cercle (30) correspond au foyer d'ellipse (32).

10. Actionneur (1) selon l'une quelconque des revendications précédentes,
**caractérisé en ce que**,
la roue dentée de sortie (12) présente une section de dents dentée (13) destinée à venir en prise avec la section de roue dentée de sortie (23) de la roue dentée de transmission (20) et une section libre sans dent (14).

11. Actionneur (1) selon l'une quelconque des revendications précédentes,
**caractérisé en ce que**,
l'actionneur (3) est au moins partiellement formé par la roue dentée de sortie (12).
